# EUROPEAN PATENT APPLICATION

(11) **EP 0 534 521 A1**
(43) Date of publication of application: **31.03.1993**
(21) Application number: 92202692.7
(22) Date of filing: 05.09.1992
(51) Int. Cl.: B65G 17/06, B65G 17/10

(54) **Slat for slat conveyor**

(30) Priority: 24.09.1991 IT MI912549
(71) Applicant: RBI - RAIMONDO BACCARANI IMPIANTI s.r.l., 20162 Milano (IT)
(72) Inventor: Baccarani, Raimondo, I-20159 Milano (IT); Baccarani, Giovanni, I-20159 Milano (IT)
(74) Representative: Mittler, Enrico

(57) **Abstract**

The slat is formed by a base (2) approximately rectangular in shape and by a pair of sides (3) fixed to the lateral edges (4) of the base (2) along their entire longitudinal extension. The sides (3) have a front part (11) overlapping a corresponding front portion (7) of the base (2) with a predetermined reciprocal distance between external faces (20) of the same sides (3) and a rear part (9) parallel to the front part (11) and provided with internal faces (19) at a predetermined reciprocal distance equal to the distance between the external faces (20) of the front part (11).

## Description

The present invention relates to a slat for a slat conveyor.

The principal component parts of a conveyor are essentially flexible or articulated elements which perform the function of transmitting driving force such as, for example, chains, cables, textile or metal belts, wire mesh, etc., which are in turn wound around smooth or toothed actuating and transmission drums or wheels.

These driving elements also link reciprocally the elements intended to collect and contain the material to be transported and to unload it in predetermined points of the conveyor path. The containing elements may be buckets, slats, boxes, cells, plates and are attached in various ways to the driving elements listed above.

Support elements, such as for example rollers, wheels and pulleys, are also present in a conveyor to support the load of the dead weight of the driving elements and of the elements for containing the material, as well as the weight of the material to be conveyed.

The elements intended to collect and contain the material to be conveyed, more particularly those indicated henceforth as slats, must follow the movement of the driving elements around actuating and transmission drums or wheels, therefore they must be free to rotate and move one in relation to the other, yet they must also form a seal one between the other in order to prevent leakage of the material to be conveyed.

A slat normally comprises a base and two sides or edges. The seal must be ensured both between the bases and between the sides of consecutive slats.

It is relatively easy to create a seal between the bases of consecutive slats in conveyors with a horizontal path or in horizontal sections of conveyors with a mixed path, partly horizontal and partly inclined.

It is however somewhat difficult to ensure the seal between the bases of consecutive slats in tilted conveyors or in tilted sections of conveyors with a mixed path, partly horizontal and partly inclined.

One of the known systems used for this purpose provides for the simple overlapping of flat bases of slats which follow one another in the direction of motion of the conveyor. The bases are held pressed in a slightly inclined position one on the other by a system of anchoring (screws or rivets for example) to underlying driving elements.

Another known system provides for the bases of the slats to be formed by plates with cylindrical surfaces at their extremities. Each cylindrical surface is designed to couple with a corresponding cylindrical surface of the base of an adjacent slat. In the case of a discontinuous series of driving elements, such as the links of a chain, the axes of rotation of the coupled cylindrical surfaces coincide with the reciprocal rotation axis of a pair of underlying driving elements. In the case wherein continuous driving elements such as cables, belts or mesh, are used, the axes of rotation of the coupled cylindrical surfaces coincide with those of the actuating drums or pulleys.

Alternatively a method is likewise known whereby the bases of the slats are suitably shaped in such a way that the rear part of the base of a slat remains engaged to overlap and form a seal with the front part of the base of the next slat in the direction of motion of the conveyor. According to this solution a pocket is formed between the bases of the consecutive slats which remains closed up to a certain angle of inclination of the bases and later opens, thereby allowing material to enter therein, and then however, after a further rotation of the slat, being able to come out of the pocket itself. Nevertheless, in practice, not all the material which has infiltrated the pocket leaves it. A certain quantity of material remains trapped therein, partly due to mere adhesion, partly to damp, traces of oil etc., and eventually impedes closure of the pocket, gives rise to wear and gradually increases the tendency to trap material which is then discharged on the transmission axis and also along the return path. This forms accumulations of material which must be removed periodically and which damage the conveyors to the extent that they cause them to break.

In order to form the required seal between the sides or edges of the conveyor, it is on the other hand necessary to achieve overlapping between the sides of one slat and those of the preceding one, that is, it must be possible to insert partially each slat into the preceding one.

This requires the slats to have front and rear portions of different widths, in addition to a length greater than the pitch of the conveyor. Generally, in order to facilitate unloading, it is decided to make the front portion narrower than the rear one.

The overlapping of the sides of two consecutive slats must be such so as not to "open" during the reciprocal rotation of the slats at a pulley or the like.

According to a known art, a slat is manufactured by placing the sides next to a chamfered base whose sides converge in the direction of transport. The difference in width between the front and rear portions of the base is equal to approximately twice the thickness of the sides. The sides are flat.

This solution has the disadvantage that, when the slats rotate along the forward path of the conveyor, the wider rear extremity of the slat moves forwards, and coincides with the narrower front extremity of the next slat. In this way a crack opens through which the material may leak, particularly in the case of conveyors which move upwards.

According to DE-A-3438231, the base of the slate is formed with opposite sides in sections parallel to the direction of motion of the conveyor and joined by stepped or ramp segments and, as in the previous case, with the rear part greater in width than the front part. According to this solution the sides are also formed with a constant thickness with a profile such as to adhere to the abovementioned opposite sides of the base of the slats.

The use of this solution has the advantage that, after the relative motion of consecutive slats, the coupled sides do not detach and material does not leak.

The disadvantage of this solution lies in the fact that the surface contact between the coupled sides may cause undesirable material to enter between them. Moreover the sides must be formed very accurately in order not to give rise to wear or imperfect seal.

Finally a slight variation in the solution described hereinbefore provides for the sides to have a small area raised outwards which extends along the whole height enabling a contact to be achieved between adjacent sides, concentrated on a line rather than extending to the surface between adjacent sides, and thus easier to form accurately.

This raised area may be achieved by overlapping or by pressing according to a method known in the technique of pressing plate as forming an "insert".

All the solutions illustrated above for achieving the seal between the sides provide for the lateral adjacency of the sides to the base of a respective slat. Therefore in the coupling between the sides of consecutive slats, account must be taken of the machining tolerances. Uncertainty as to the sign to be attributed to the tolerances means that the coupling of consecutive slates is at times achieved with excessive clearance, other times it is difficult or even impossible.

According to US-A-4840269 a slat is known, which comprises a substantially rectangular base and a pair of sides fixed to lateral edges of the base and having a front end separated from and superimposed to a corresponding front portion of the base with a predetermined reciprocal distance between external faces of said front ends and a rear end parallel to said front end and provided with internal faces at a predetermined reciprocal distance equal to said distance between the external faces of the front end.

The seal between the coupled ends of the sides of consecutive slats is obtained thanks to the resiliency of the material of the slat sides, which urges the front ends against the rear ends of the preceding slat.

The object of the present invention is to provide a slat for a slat conveyor, wherein perfect seal is guaranteed in the motion between consecutive slats independently of machining tolerances and without any necessity of a resilient material for the slat sides.

In accordance with the invention this object is achieved with a slat for a slat conveyor formed by an approximately rectangular base and by a pair of sides fixed to lateral edges of said base, said sides having a front part overlapping a corresponding front portion of the base with a predetermined reciprocal distance between external faces of said front part of the sides, and a rear part parallel to the abovementioned front part and provided with internal faces at a predetermined reciprocal distance equal to said distance between the external faces of the front part, characterized in that said sides are made integral with the base along the entire longitudinal extension thereof.

In this way the width of the slat in the front portion is no longer dependent upon the tolerance on the thickness of the sides and on the width of the base and can correspond perfectly to the width of the rear portion of the slat itself. This guarantees perfect contact between consecutive slats both in horizontal conveying and in inclined conveying. Moreover, a resilient material for the slat sides is no longer necessary.

According to another feature of the present invention, said base has a curved rear portion with the centre of curvature on the axis of hinging with the successive slat and with an upper face having a bending radius equal to the radius of rotation of the front extremity of the base of the successive slat in relation to said axis of hinging.

In this way the seal between the bases remains effective for the entire angle of reciprocal rotation of the slats and not only for part of the angle itself.

The features of the present invention shall be made clear by its embodiments illustrated by way of a non-limiting example in the accompanying drawings, in which:
Fig. 1 is a view from above of a slat according to the present invention;
Fig. 2 is a front view of the slat of Fig. 1;
Fig. 3 is a lateral right-hand view of the slat of Fig. 1 in assembled condition;
Fig. 4 is a longitudinal sectional view of the slat of Fig. 1 in disassembled condition;
Fig. 5 shows the enlarged detail of the front face of a modified side for a slat according to the invention;
Fig. 6 and 7 are enlarged cross-sections of a slat side, taken along line VI-VI and VII-VII of Fig. 1, respectively;
Fig. 8 shows in plan view two coupled consecutive slats provided with sides of a given thickness;
Fig. 9 shows in plan view two coupled consecutive slats provided with sides of a greater thickness compared to those in Fig. 8;
Fig. 10 is a longitudinal section of a slat conveyor according to an embodiment of the invention;
Fig. 11 is a longitudinal section of a slat conveyor according to a further embodiment of the invention;
Fig. 12 is a longitudinal section of a slat conveyor according to a further embodiment of the invention;
Fig. 13 is an enlarged detail of Fig. 11 relating to an insert for the engagement between corresponding bases of consecutive slats.

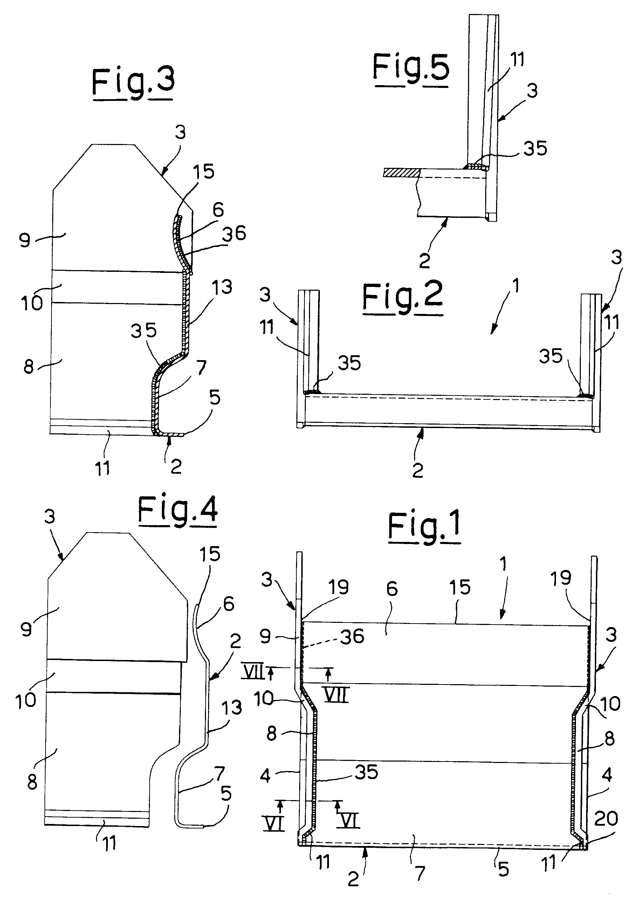

With reference to Figs. 1-7, a slat for a slat conveyor according to the invention, denoted as a whole by the numerical reference 1, is formed by a base 2, approximately rectangular in shape and with lateral edges 4 and end edges 5, 15 and by a pair of sides 3, integral with the base 2 or preferably soldered thereto. The sides 3 have respective front parts 11, smaller in height, overlapping a front portion 7 of the base 2 and fixed thereto by upper solderings 35 (Figs. 1, 3 and 6), intermediate portions 8 and 10 overlapping a corresponding intermediate portion 13 of the base 2 and fixed thereto by the upper solderings 35, and rear parts 9 of greater height, parallel to the front parts 11 and laterally placed and fixed by lower solderings 36 (Figs. 1, 3 and 7) adjacent a rear portion 6 of the base 2 so as to project slightly downwards, in this way contributing to the rigidity of the connection between the base 2 and the sides 3. The abovementioned rear parts 9 are provided with internal faces 19 at a predetermined reciprocal distance equal to the reciprocal distance between the external faces 20 of the front parts 11. In this way the total width of the slat 1 in its front portion is not dependent upon the tolerance on the thickness of the sides 3 nor upon that on the width of the base 2 and is such so as to be inserted with absolute precision between the sides 3 of the rear portion 6 of the preceding slat.

The front part 11 of the side 3 constitutes an insert engaging with the internal face 19 of the rear part 9 of the side 3 of a slat preceding it in the direction of motion of the conveyor.

As shown in Fig. 5, the front of the insert 11 may be formed with an oblique configuration in relation to the rest of the same side 3 and more particularly to the rear part 9 of the latter. The purpose of this is to avoid possible reductions in engagement with the rear part of the corresponding side of the preceding slat in the event of possible lateral deformations, including elastic deformations, of the sides of the latter.

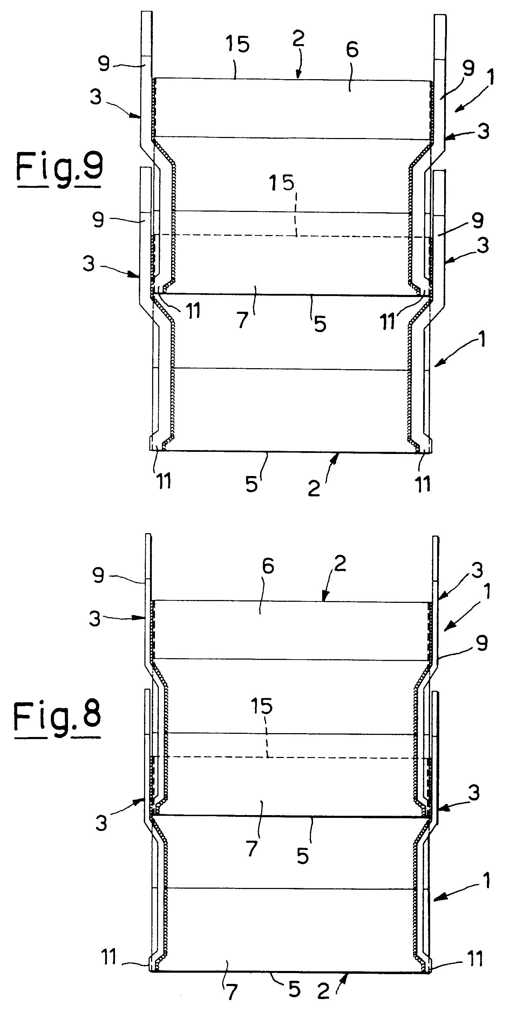

The coupling between consecutive slats 1 is shown in Fig. 8. As can be seen in Fig. 9, this coupling remains perfect, independently of the thickness of the sides 3.

As already mentioned and as can be seen in Fig. 4, the rear parts 9 of the sides 3 have a greater height than the front parts 11, so as to be, as illustrated in Fig. 3, more aligned with the latter once the sides 3 have been attached to the base 2 of a slat 1.

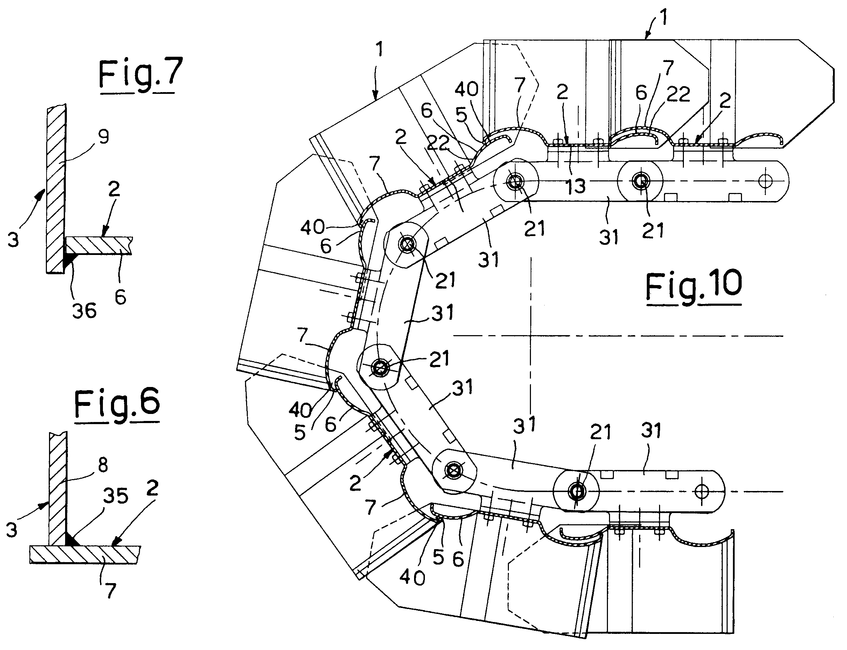

As illustrated further in Fig. 4, the rear portion 6 of the base 2 of the slat 1 is shaped so as to have, as can be seen in the conveyor of Fig. 10, a centre of curvature which coincides with the axis of hinging 21 with a successive slat and relative driving elements 31 (for example the links of a chain) and an upper face 22 with bending radius equal to the radius of rotation of the front terminal edge 5 of the base 2 of the abovementioned successive slat in relation to the same axis of hinging 21.

The front portion 7 of the base 2 is provided with aterminal turned edge 40 and is joined by joint sections 13 (Fig. 1) to the rear portion 6.

It should be noted that the slats 1 are anchored to the driving elements 31, in such a way that the alignment of the slats is restricted to the axis of the elements themselves. It is not therefore sufficient for the elements to insert one in the other with great precision: the holes for connecting the driving elements to the slats inserted one in the other must also be perfectly aligned; otherwise the slats are forced one against the other at one of the sides, with consequent rapid wear.

It should also be noted that the position of the contact insert between the sides 3, being independent of the base, can be at an extremely precise distance from the holes for anchoring the bases to the driving elements, thus ensuring perfect alignment and avoiding wear.

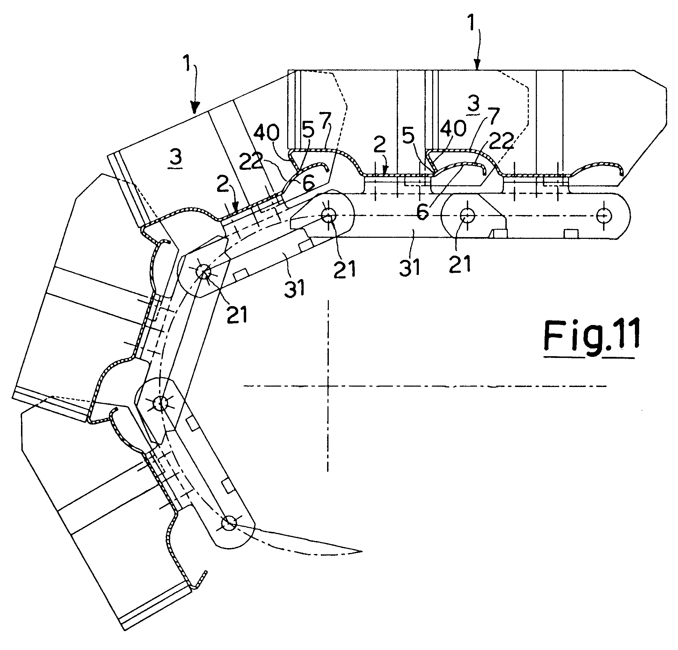

According to an embodiment of a conveyor in alternative to the one of Fig. 10 and illustrated in Fig. 11, the base 2 of a slat 1 is formed with the front portion 7 having a terminal turned edge 40 turned backwards, whose end edge 5 has again a radius of rotation equal to the bending radius of the upper face 22 of the rear portion 6 of the preceding slat. For this embodiment the same said for the previous embodiment holds true.

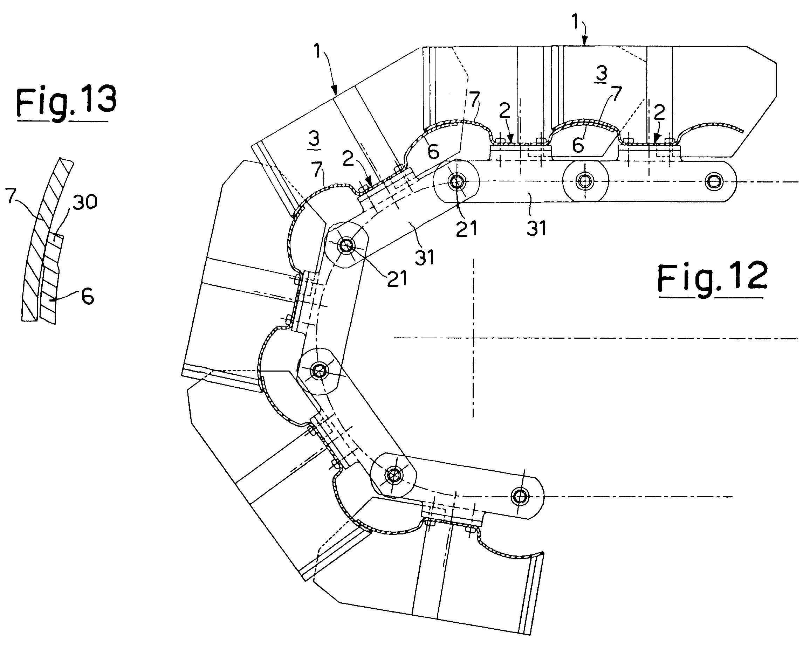

According to a further possible embodiment of a conveyor in alternative to the previous ones and illustrated in Fig. 12, the base 2 of the slats 1 is formed with the front portion 7 and rear portion 6 curved, with the centre of curvature on the axis of hinging 21.

This embodiment provides for an insert 30 to project preferably outwards at the extremity of the rear portion 6 of the base 2 of the slat 1, as illustrated in the enlarged detail of Fig. 13, designed to form a linear contact with the front portion 7 of the base 2 of the successive slat connected thereto in the direction of motion of the conveyor.

The insert 30 may, in a totally analogous way, project inwards at the extremity of the front portion 7 of the base 2 of the slat 1, in this way forming a linear contact with the rear portion 6 of the base 2 of the slat preceding it in the direction of motion of the conveyor.

## Claims

1. Slat for a slat conveyor (1) formed by an approximately rectangular base (2) and by a pair of sides (3) fixed to lateral edges (4) of said base (2), said sides (3) having a front part (11) overlapping a corresponding front portion (7) of the base (2) with a predetermined reciprocal distance between external faces (20) of said front part (11) of the sides (3) and a rear part (9) parallel to the aforementioned front part (11) and provided witih internal faces (19) at a predetermined reciprocal distance equal to said distance between the external faces (20) of the front part (11), characterized in that said sides (3) are made integral with the base (2) along the entire longitudinal extension thereof.

2. Slat according to claim 1, characterised in that said front part (11) constitutes an insert projecting outwards and engaged with the rear part (9) of the side (3) of a preceding slat in the direction of motion of the conveyor.

3. Slat according to claim 2, characterised in that said insert (11) is formed with an oblique front configuration in relation to said rear part (9) of the same side (3).

4. Slat according to claim 1, characterised in that said base (2) has a rear curved portion (6) with centre of curvature on the axis of hinging (21) with the successive slat and with an upper face (22) having a bending radius equal to the radius of rotation of the front portion (7) of the base (2) of the successive slat in relation to said axis of hinging (21).

5. Slat according to claim 4, characterised in that said front portion (7) has a terminal turned edge which is curved in shape, whose end edge (5) has again a radius of rotation equal to the bending radius of the upper face (22) of the rear portion (6) of the preceding slat.

6. Slat according to claim 4, characterised in that said front portion (7) and rear portion (6) are both curved with centre of curvature on said axis of hinging (21) with the preceding slat.

7. Slat according to claim 6, characterised in that projecting at the extremity of one of the said front and rear portions (7, 6) is an insert (30) designed to form a linear contact with the other of said front and rear portions (7, 6) of the base (2) of the slat immediately consecutive in the direction of motion of the conveyor.

8. Slat according to claim 1, characterised in that said rear part (9) of the sides (3) is laterally placed next to a corresponding rear portion (6) of the base (2) so as to project slightly downwards in relation thereto.

9. Slat according to claim 1, characterised in that said base (2) and said sides (3) are formed in separate parts fixed to one another by solderings (35, 36).

10. Slat according to claim 9, characterized in that said front parts (11) of the sides (3) are fixed to said front portion (7) of the base (2) by upper solderings (35) and said rear parts (9) of the sides (3) are fixed to a rear portion (6) of the base (2) by lower solderings (36).
